# FASCICULE DE BREVET EUROPEEN

(11) **EP 3 069 631 B1**
(45) Date de publication et mention de la délivrance du brevet: **20.06.2018**
(21) Numéro de dépôt: 15185383.5
(22) Date de dépôt: 16.09.2015
(51) Int. Cl.: A45D 34/04, B65D 1/02, B65D 1/09

(54) **FLACON À BILLE AMÉLIORÉ**
VERBESSERTE ROLL-ON-FLASCHE
IMPROVED BALL VIAL

(30) Priorité: 19.03.2015 FR 1552291
(43) Date de publication de la demande: 21.09.2016
(73) Titulaire: Seriplast, 01117 Oyonnax (FR)
(72) Inventeur: CENES, Kévin, 01100 Oyonnax (FR)
(74) Mandataire: Delorme, Nicolas

(56) Documents cités:
- EP-A1- 0 456 532
- GB-A- 2 168 931

## Description

La présente invention concerne un flacon sécable configuré pour délivrer un produit liquide, pâteux ou solide.

Les ampoules ou flacons sécables disponibles sur le marché permettent le stockage de produit de façon étanche et une délivrance au moment choisi du produit par rupture de la zone sécable. Or, de part le diamètre du flacon au niveau de la zone sécable, la délivrance du produit est difficile à doser, notamment lorsque le produit est très fluide ou lorsqu'il se présente sous la forme d'une poudre. Dans le cas d'un flacon servant d'échantillon de parfum, une fois la zone sécable rompue, le parfum s'écoule de façon très rapide et en quantité très importante. Il est difficile de l'appliquer avec un dosage raisonnable sur différentes régions du corps par exemple. Il est également compliqué d'éviter que le contenu du flacon ne s'écoule en dehors du flacon une fois ce dernier ouvert de sorte que celui-ci est souvent limité à un usage unique.

Le document EP 0 456 532 A1 concerne un dispositif applicateur à bille pour produit liquide ou pâteux, constitué par un récipient, par un logement d'une bille et par un bouchon, le dispositif comportant un corps obtenu par moulage d'une seule pièce formant le récipient, le système de logement de bille et le bouchon. Le but de la présente invention est ainsi de pallier au moins l'un de ces inconvénients. Elle propose à cet effet un flacon destiné à la délivrance d'un produit liquide, pâteux ou solide, tel que défini dans la revendication 1 de la présente demande. Cette configuration permet ainsi de délivrer le produit de façon contrôlée une fois la zone sécable rompue. La bille d'application et la portion de logement permettent de réguler la délivrance du produit, par exemple en produisant un goutte à goutte, notamment lorsque le produit est très fluide comme le parfum. La bille d'application peut également servir d'applicateur massant, notamment pour délivrer un fluide moins liquide, tel qu'un gel cosmétique. Par ailleurs, la présence de la bille d'application permet de conserver une étanchéité partielle et ainsi de limiter la contamination du produit par des éléments extérieurs. Dans le cas d'un produit contenu dans le flacon sous la forme d'une poudre, la bille d'application assure une répartition uniforme et homogène de la poudre sur la surface d'application, ce qui est particulièrement utile lors de l'application d'un fard pour maquillage par exemple.

Cette configuration est simple à fabriquer, permet de régler le jeu entre la bille d'application et la portion de logement avec précision.

Il est entendu dans le présent document que l'expression 'axe longitudinal ' correspond à l'axe s'étendant entre le fond d'obturation de la portion de réservoir et le capuchon du flacon.

Selon une variante de réalisation, la protubérance inférieure est décalée angulairement de la protubérance supérieure.

Selon une autre disposition, au moins l'une des deux protubérances parmi la protubérance inférieure et la protubérance supérieure s'étend perpendiculairement à l'axe longitudinal du flacon et au moins en partie sur le pourtour intérieur de la portion de logement.

De préférence, l'une des protubérances parmi la protubérance inférieure et la protubérance supérieure présente globalement une forme annulaire. La cavité est ainsi bien délimitée.

Selon une disposition, le pourtour intérieur de la portion de logement présente une forme annulaire. Le jeu entre la bille d'application et la portion de logement est alors minimisé et assure une régulation optimale du produit délivré.

Selon une variante, au moins l'une des protubérances parmi la protubérance inférieure et la protubérance supérieure s'étend radialement à partir du pourtour intérieur de la portion de logement en formant chacune un pan incliné orienté vers la cavité.

La portion de logement comprend une partie intermédiaire de forme annulaire s'étendant entre la protubérance inférieure et la protubérance supérieure, la partie intermédiaire présentant un diamètre intérieur supérieur d'environ 0.2 à 0.6 millimètre au diamètre de la bille d'application.

De préférence, la partie intermédiaire présente un diamètre intérieur supérieur d'environ 0.4 millimètre au diamètre de la bille d'application.

Selon une disposition, la portion de logement et la bille d'application sont configurées de sorte que la bille d'application fait saillie de la protubérance supérieure dans la direction de la zone sécable. Selon l'invention, la protubérance inférieure présente un diamètre interne supérieur au diamètre interne de la protubérance supérieure. Ainsi, la bille d'application forme une saillie dans la direction de la portion de réservoir dont le volume est plus important que celui de la saillie formée par la bille dans la direction de la zone sécable. Cette configuration permet à la bille d'application d'avoir une bonne surface de contact avec le produit contenu dans la portion de réservoir toute en limitant son application à l'extérieur par une surface en saillie plus réduite.

Avantageusement, la portion de réservoir comprend un organe de maintien de la bille d'application mobile en rotation dans la portion de logement. Cette configuration permet d'interdire à la bille d'application de se déplacer de la portion de logement vers la portion de réservoir lors de l'utilisation du flacon. En effet, selon la pression appliquée sur la bille d'application pendant la délivrance du produit, la bille d'application peut s'échapper de la portion logement par l'ouverture délimitée par la protubérance inférieure. Ainsi, l'organe de maintien présent dans la portion de réservoir sous-jacente, l'en empêche.

De préférence, l'organe de maintien présente une forme de disque comprenant des ouvertures traversant l'épaisseur du disque de sorte à permettre la circulation du produit entre la portion de réservoir et la portion de logement. Cet organe de maintien est en matière plastique. L'organe de maintien est avantageusement formé à part du flacon. Ceci évite un moulage avec une contre-dépouille difficile à réaliser.

Selon une disposition, la portion de réservoir comporte au moins un élément de retenue sur lequel l'organe de maintien est apte à prendre appui, et un organe de butée contre lequel l'organe de maintien est apte à venir en butée, l'organe de maintien étant disposé entre l'au moins un élément de retenue et l'organe de butée.

Ainsi, l'organe de butée et l'au moins un élément de retenue délimitent un espace de réception de l'organe de maintien dans la portion de réservoir.

Cette configuration permet de disposer un organe maintien dans le flacon pour empêcher la bille d'application de rentrer dans la portion de réservoir une fois qu'elle a été insérée dans la portion de logement, tout en conservant un jeu fonctionnel garantissant la mobilité de la bille d'application.

L'organe de maintien comprend une première surface et une deuxième surface opposée à la première surface, la première surface étant apte à prendre appui sur l'au moins un élément de retenue et la deuxième surface étant apte à venir en butée contre l'organe de butée.

Avantageusement, l'au moins un élément de retenue fait saillie de la surface intérieure de la portion de réservoir.

Selon une disposition l'au moins un élément de retenue comprend pluralité de lèvres ou une unique lèvre annulaire.

De préférence, la lèvre forme une saillie d'au moins 5/10^{e} du diamètre intérieur de la portion de réservoir mesuré au plus large.

L'organe de butée comprend une nervure faisant saillie de la surface intérieure de la portion de réservoir de sorte que lors de l'introduction de l'organe de maintien dans l'espace de réception, l'organe de maintien peut venir en butée contre la nervure sans pour autant exercer une pression sur la bille d'application pouvant conduire à la rupture de la zone sécable. La nervure peut par ailleurs être une nervure discontinue ou annulaire.

L'organe de butée est en matériau élastiquement déformable de sorte à pouvoir légèrement se comprimer lors de l'insertion de l'organe de maintien dans l'espace de réception, puis de reprendre son volume initial de sorte à maintenir l'organe de maintien entre l'organe de butée et l'au moins un élément de retenue.

Typiquement, la portion de réservoir comprend une première région d'extrémité reliée à la portion de logement et une seconde région d'extrémité opposée à la première région d'extrémité, la seconde région d'extrémité étant munie d'un fond d'obturation. Cette configuration permet le remplissage du flacon avant la mise en place du fond d'obturation, puis une fermeture étanche, à partir du fond de la portion de réservoir.

Avantageusement, la portion de réservoir, la portion de logement, la protubérance inférieure, la protubérance supérieure, l'organe de butée, l'au moins un élément de retenue et le capuchon sont venus de matière. La fabrication du flacon peut être obtenue facilement par moulage à partir d'une seule matière.

De préférence, la bille d'application est en matériau inoxydable. Ceci évite un endommagement lorsque la bille d'application est en contact avec des produits qui peuvent être assez agressifs, tels que les huiles essentielles. Par ailleurs cette matière confère une certaine masse à la bille qui de ce fait ne flotte pas en surface du produit à délivrer et obture facilement l'orifice de délivrance formé après rupture de la zone sécable, notamment lorsque le flacon est tête en bas. Dans cette position, il suffit de tapoter sur le flacon pour une délivrance du produit par un goutte à goutte contrôlé.

Selon une variante de réalisation, la bille d'application est en verre. Son poids permet un déplacement facile et l'obturation de l'orifice de délivrance, avec le cas échéant un effet de transparence permettant par exemple de vérifier le contenu résiduel dans le flacon après une première utilisation.

Selon une autre possibilité, la bille d'application est en matière plastique. Ce matériau est peu couteux et est avantageusement utilisé avec des produits non corrosifs.

Avantageusement, la paroi du capuchon comprend une portion de paroi interne et une portion de paroi externe, la zone sécable étant configurée pour relier uniquement la portion de paroi externe à la paroi de la portion de logement. Ainsi, la portion de paroi interne est dépourvue de liaison avec la portion de logement. La paroi du capuchon présente alors une épaisseur globalement uniforme à proximité de la zone sécable, de sorte à augmenter sa rigidité et rendre la rupture de la zone sécable plus facile par comparaison avec une zone sécable formée par un rétreint de matière de part et d'autre de la zone de rupture.

Selon une disposition particulière, la portion de logement à l'interface avec le capuchon formant la zone sécable présente un diamètre interne supérieur au diamètre interne la portion de paroi interne du capuchon.

De préférence, la portion de logement, la bille d'application et la zone sécable sont configurées de sorte que la portion en saillie de la bille d'application est espacée de la portion de paroi interne du capuchon lorsque le flacon est tête en bas. Dans cette configuration, la saillie formée par la bille d'application ne fait pas obstacle à la rupture de la zone sécable.

De préférence, la portion de réservoir présente globalement une forme cylindrique dont le diamètre est supérieur à celui de la portion de logement. Cette configuration permet de faciliter le retrait du flacon de son moule à la fin du moulage.

Avantageusement, la portion de réservoir comporte une paroi présentant une épaisseur graduelle entre la première région d'extrémité et la seconde région d'extrémité, et notamment une épaisseur variant entre environ 0.75 mm et 0.45 mm, l'épaisseur la plus mince de la paroi étant située dans une région centrale de la portion de réservoir et s'étendant entre la première région d'extrémité et la seconde région d'extrémité. Ainsi, une pression appliquée sur la paroi de la région centrale entraine sa déformation vers l'intérieur ce qui comprime le produit contenu, par exemple pâteux, pour en faciliter la délivrance. Dans le même temps, la paroi au niveau de la première région d'extrémité et de la seconde région d'extrémité reste rigide et ne se déforme pas. En conséquence, la portion de logement ne se déforme pas et la bille d'application reste en place, de même que le fond d'obturation reste solidaire de la portion de réservoir.

D'autres aspects, buts et avantages de la présente invention apparaîtront mieux à la lecture de la description suivante de plusieurs modes de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 illustre une vue en coupe du flacon selon un mode de réalisation de l'invention.
La figure 2 illustre une vue agrandie d'une bille d'application illustrée à la figure 1.
La figure 3 illustre une vue en coupe du flacon tête en bas après rupture au niveau d'une zone sécable selon un mode de réalisation de l'invention.
La figure 4 illustre une vue en coupe du flacon comprenant un organe de maintien selon un deuxième mode de réalisation de l'invention.
La figure 5 illustre schématiquement un organe de maintien selon une possibilité de réalisation de l'invention.

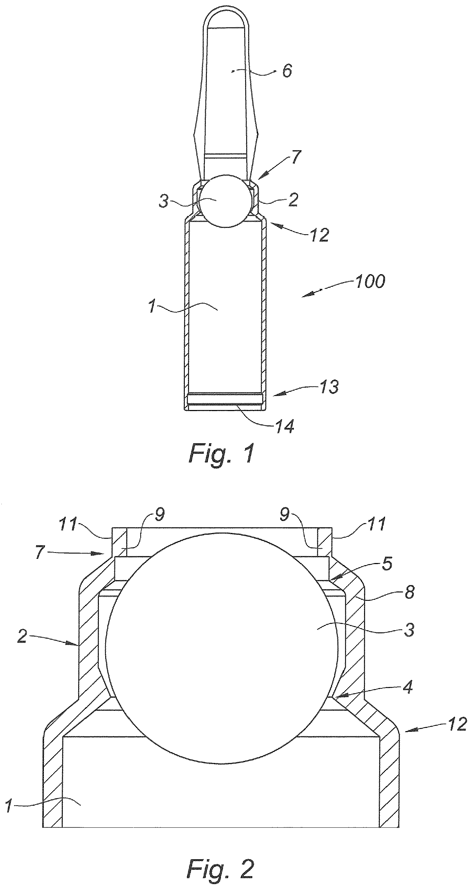

Comme illustré à la figure 1, le flacon 100 comprend une portion de réservoir 1 surmontée d'une portion de logement 2, une bille d'application 3 logée partiellement dans la portion de logement 2, un capuchon 6 et une zone sécable 7 prévue à l'interface entre la portion de logement 2 et le capuchon 6. Plus précisément et comme illustré à la figure 2, la bille d'application 3 est mobile en rotation et logée en partie entre deux protubérances annulaires prévues sur le pourtour intérieur de la portion de logement 2 et configurées pour délimiter une cavité. Ces deux protubérances se composent d'une protubérance inférieure 4 et une protubérance supérieure 5 décalée dans la direction longitudinale du flacon 100, respectivement dans le sens de la portion de réservoir 1 vers le capuchon 6. Comme illustré sur les figures, la protubérance inférieure 4 et la protubérance supérieure 5 s'étendent radialement à partir du pourtour intérieur annulaire de la portion de logement 2 en formant chacune un pan incliné orienté vers la cavité.

Selon une variante non illustrée, chaque protubérance 4,5 s'étend sur une partie seulement du pourtour intérieur de la portion de logement 2. Selon encore une autre variante, la cavité est délimitée par plusieurs protubérances inférieures ponctuelles, alignées selon une direction perpendiculaire à la direction longitudinale du flacon 100 et plusieurs protubérances supérieures ponctuelles alignées de la même façon.

Comme illustré sur les figures 1 à 3, la portion de logement 2 et la bille d'application 3 sont configurées de sorte que la bille d'application 3 fait saillie de la zone sécable 7 en direction du capuchon 6. La bille d'application 3 étant partiellement logée dans la cavité délimité par les protubérances 4,5, elle fait aussi saillie du coté de la portion de réservoir 1. Par ailleurs, la protubérance inférieure 4 présente un diamètre interne supérieur au diamètre interne de la protubérance supérieure 5 de sorte que la saillie formée par la bille d'application 3 est plus importante du coté de la portion de réservoir 1.

Comme il est bien visible sur la figure 2, la portion de logement 2 de la présente invention comprend une partie intermédiaire 8 de forme annulaire s'étendant entre la protubérance inférieure 4 et la protubérance supérieure 5. Cette partie intermédiaire 8 est configurée pour présenter un diamètre intérieur supérieur d'environ 0.4 mm au diamètre de la bille de sorte à former un jeu permettant sa mobilité et le passage du produit.

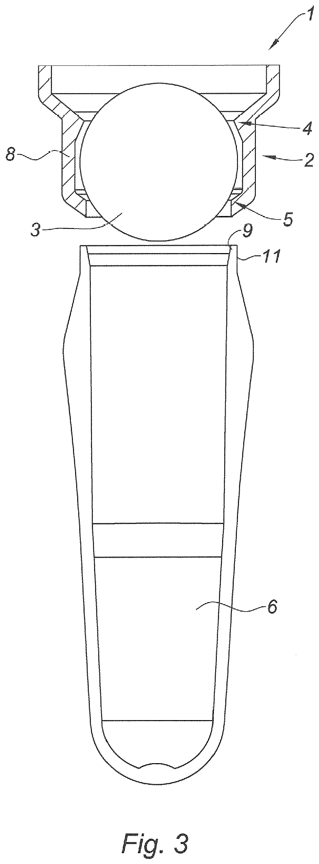

Les figures 2 et 3 illustrent le flacon 100 avant et après rupture au niveau de la zone sécable 7. Cette zone sécable 7 est obtenue par une configuration spécifique de l'interface entre la portion de logement 2 et le capuchon 6. En effet, la paroi du capuchon 6 comprend une portion de paroi interne 9 et une portion de paroi externe 11. La zone sécable 7 est réalisée par une liaison créée seulement entre la portion de paroi externe 11 du capuchon 6 et la paroi de la portion de logement 2.

Par ailleurs, la paroi de la portion de logement 2 présente un diamètre intérieur supérieur au diamètre intérieur de la portion de paroi interne 9 du capuchon 6. La paroi du capuchon 6, la portion de logement 2, la bille d'application 3 et la zone sécable 7 sont alors arrangées de sorte que la portion de la bille 3 faisant saillie du coté de la zone sécable 7 est en permanence espacée de la portion de paroi interne 9 du capuchon 6, c'est à dire qu'elles n'entrent pas en contact, même lorsque le flacon 100 est tête en bas. Ainsi, la rupture du flacon 100 au niveau de la zone sécable 7 n'est pas gênée par la portion en saillie et la bille d'application 3 ne risque pas d'être expulsée de la portion de logement 2 lors de la rupture.

La portion de réservoir 1, la portion de logement 2, la protubérance inférieure 4, la protubérance supérieure 5 et le capuchon 6 sont venus de matière de sorte à faciliter la fabrication du flacon 100. La bille 3 est en matériau choisi entre l'inox, le verre pour éviter son flottement dans la portion de logement 2 sur le produit et le plastique lorsque le produit à délivrer n'est pas trop corrosif.

Comme illustré à la figure 1, la portion de réservoir 1 présente globalement une forme cylindrique dont le diamètre est supérieur à celui de la portion de logement 2.

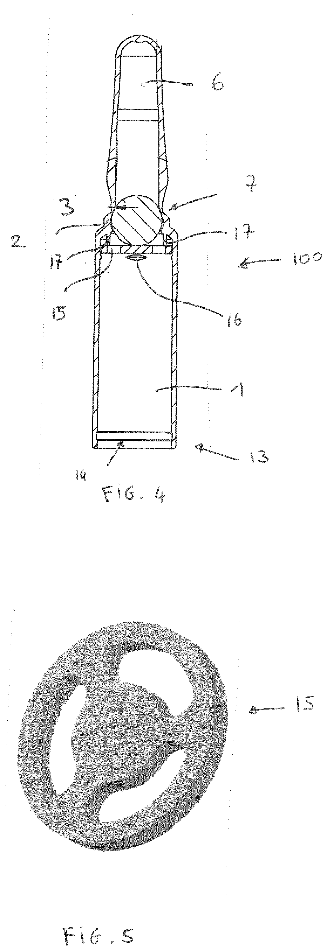

Le deuxième mode de réalisation illustré à la figure 4 diffère du précédent en ce que la portion de réservoir 2 comprend un organe de maintien 15 de la bille d'application 3. Cet organe de maintien 15 présente une forme de disque comprenant des ouvertures traversantes destinées à la circulation du produit dans le flacon 100 et vers l'extérieur (figure 5). Cet organe de maintien 15 repose sur quatre éléments de retenue 16 présentant chacun une forme de nervures moulées, communément appelées grains de riz, en faisant saillie de la surface intérieure de la portion de réservoir 1 (figure 4). Ainsi, la position de la bille d'application 3 est maintenue dans la portion de logement 2 même dans le cas de l'application d'une pression importante sur celle-ci notamment lorsque la bille d'application 3 est roulée sur la peau par exemple pour l'application du produit. Selon une variante non illustrée, le nombre d'éléments de retenue 16 peut être différent et même se présenter sous la forme d'une unique lèvre annulaire.

Comme il est visible sur la figure 4, un organe de butée 17 disposé de l'autre coté des éléments de retenue 16 par rapport l'organe de maintien 15, permet de diminuer les possibilités de déplacement de ce dernier lors de son introduction dans l'espace de réception délimité entre les éléments de retenue 16 et l'organe de butée 17. La pression éventuelle appliquée sur la bille d'application 3 au cours de cette introduction est donc limitée de sorte que les risques de rupture de la zone sécable 7 sont quasi nuls. Par ailleurs, l'organe de maintien 15 ne peut pas être extrait accidentellement dudit espace de réception lors d'une l'utilisation normale du flacon 100.

Par ailleurs, selon une variante de réalisation non illustrée, la portion de réservoir 1 comporte une paroi présentant une épaisseur graduelle entre une première région d'extrémité 12 reliée à la portion de logement 2 et une seconde région d'extrémité 13 opposée à la première région d'extrémité 12 et munie d'un fond d'obturation 14, et notamment une épaisseur variant entre environ 0.75 mm et 0.45 mm, l'épaisseur la plus mince de la paroi étant située dans une région centrale de la portion de réservoir 1, s'étendant entre la première région d'extrémité 12 et la seconde région d'extrémité 13.

Ainsi, la présente invention propose un flacon 100 ruptible, simple à fabriquer, peu coûteux et permettant de contrôler la délivrance du produit stocké.

## Revendications

1. Flacon (100) destiné à la délivrance d'un produit liquide, pâteux ou solide dans lequel le flacon (100) comprend :
- une portion de réservoir (1) destinée à contenir le produit,
- une portion de logement (2) communiquant avec la portion de réservoir (1),
- une bille d'application (3) du produit, la bille d'application (3) étant logée au moins en partie dans la portion de logement (2), en étant mobile en rotation, la portion de logement (2) étant configurée pour coopérer avec la bille d'application (3) pour réguler la délivrance du produit,
- un capuchon (6) relié par une zone sécable (7) à la portion de logement (2), le capuchon (6) étant configuré pour interdire la délivrance du produit avant rupture de la zone sécable (7),
le pourtour intérieur de la portion de logement (2) étant muni d'au moins une protubérance inférieure (4) et d'une protubérance supérieure (5) décalée par rapport à la protubérance inférieure (4) selon l'axe longitudinal du flacon (100) et dans une direction allant vers le capuchon (6), la protubérance inférieure (4) et la protubérance supérieure (5) délimitant une cavité dans laquelle la bille d'application (3) est au moins partiellement logée, **caractérisé en ce que** la protubérance inférieure (4) présente un diamètre interne supérieur au diamètre interne de la protubérance supérieure (5).

2. Flacon (100) selon la revendication 1, dans lequel au moins l'une des protubérances parmi la protubérance inférieure (4) et la protubérance supérieure (5) présente globalement une forme annulaire.

3. Flacon (100) selon l'une des revendications 1 à 2, dans lequel au moins l'une des protubérances parmi la protubérance inférieure (4) et la protubérance supérieure (5) s'étend radialement à partir du pourtour intérieur de la portion de logement (2) en formant chacune un pan incliné orienté vers la cavité.

4. Flacon (100) selon l'une des revendications 1 à 3, dans lequel la portion de logement (2) comprend une partie intermédiaire (8) de forme annulaire s'étendant entre la protubérance inférieure (4) et la protubérance supérieure (5), la partie intermédiaire (8) présentant un diamètre intérieur supérieur d'environ 0.2 à 0.6 millimètre au diamètre de la bille d'application (3).

5. Flacon (100) selon l'une des revendications 1 à 4, dans lequel la portion de réservoir (1) comprend un organe de maintien (15) de la bille d'application (3) mobile en rotation dans la portion de logement (2).

6. Flacon (100) selon la revendication 5, dans lequel l'organe de maintien (15) présente une forme de disque comprenant des ouvertures traversant l'épaisseur du disque de sorte à permettre la circulation du produit entre la portion de réservoir (1) et la portion de logement (2).

7. Flacon (100) selon l'une des revendications 5 à 6 dans lequel la portion de réservoir (1) comporte :
- au moins un élément de retenue (16) sur lequel l'organe de maintien (15) est apte à prendre appui, et
- un organe de butée (17) contre lequel l'organe de maintien (15) est apte à venir en butée, l'organe de maintien (15) étant disposé entre l'au moins un élément de retenue (16) et l'organe de butée (17).

8. Flacon (100) selon l'une des revendications 5 à 7, dans lequel l'au moins un élément de retenue (16) fait saillie de la surface intérieure de la portion de réservoir (1).

9. Flacon (100) selon l'une des revendications 5 à 8, dans lequel l'organe de butée (17) comprend une nervure faisant saillie de la surface intérieure de la portion de réservoir (1).

10. Flacon (100) selon l'une des revendications 5 à 9, dans lequel la portion de réservoir (1), la portion de logement (2), la protubérance inférieure (4), la protubérance supérieure (5), l'organe de butée (17), l'au moins un élément de retenue (16) et le capuchon (6) sont venus de matière.

11. Flacon (100) selon l'une des revendications 1 à 10, dans lequel la paroi du capuchon (6) comprend une portion de paroi interne (9) et une portion de paroi externe (11), la zone sécable (7) étant configurée pour relier uniquement la portion de paroi externe (11) à la paroi de la portion de logement (2).

12. Flacon (100) selon la revendication 11, dans lequel la portion de logement (2), la bille d'application (3) et la zone sécable (7) sont configurées de sorte que la portion en saillie de la bille d'application (3) est espacée de la portion de paroi interne (9) du capuchon (6) lorsque le flacon (100) est tête en bas.

13. Flacon (100) selon l'une des revendications 1 à 12, dans lequel la portion de réservoir (1) comporte une paroi présentant une épaisseur graduelle entre une première région d'extrémité (12) reliée à la portion de logement (2) et une seconde région d'extrémité (13) opposée à la première région d'extrémité (12), et notamment une épaisseur variant entre environ 0.75 mm et 0.45 mm, l'épaisseur la plus mince de la paroi étant située dans une région centrale de la portion de réservoir (1) s'étendant entre la première région d'extrémité (12) et la seconde région d'extrémité (13).

## Patentansprüche

1. Flasche (100), die zur Ausgabe eines flüssigen, pastösen oder festen Produkts bestimmt ist, wobei die Flasche (100) umfasst:
- einen Reservoirabschnitt (1), der bestimmt ist, das Produkt zu enthalten,
- einen Aufnahmeabschnitt (2), der mit dem Reservoirabschnitt (1) kommuniziert,
- eine Applikationskugel (3) des Produkts, wobei die Applikationskugel (3) mindestens teilweise in dem Aufnahmeabschnitt (2) aufgenommen ist, wobei sie dabei rotierend beweglich ist, wobei der Aufnahmeabschnitt (2) konfiguriert ist, um mit der Applikationskugel (3) zusammenzuwirken, um die Ausgabe des Produkts zu regeln,
- eine Kappe (6), die mittels einer durchtrennbaren Zone (7) mit dem Aufnahmeabschnitt (2) verbunden ist, wobei die Kappe (6) konfiguriert ist, um die Ausgabe des Produkts vor dem Bruch der durchtrennbaren Zone (7) zu verhindern,
wobei der innere Umfang des Aufnahmeabschnitts (2) mit mindestens einem unteren Vorsprung (4) und einem oberen Vorsprung (5) ausgestattet ist, der in Bezug zu dem unteren Vorsprung (4) gemäß der Längsachse der Flasche (100) und in einer Richtung, die sich zur Kappe (6) erstreckt, versetzt ist, wobei der untere Vorsprung (4) und der obere Vorsprung (5) einen Hohlraum begrenzen, in welchem die Applikationskugel (3) mindestens teilweise aufgenommen ist, **dadurch gekennzeichnet, dass** der untere Vorsprung (4) einen Innendurchmesser aufweist, der größer als der Innendurchmesser des oberen Vorsprungs (5) ist.

2. Flasche (100) nach Anspruch 1, wobei mindestens einer der Vorsprünge von dem unteren Vorsprung (4) und dem oberen Vorsprung (5) allgemein eine ringförmige Form aufweist.

3. Flasche (100) nach einem der Ansprüche 1 bis 2, wobei sich mindestens einer der Vorsprünge von dem unteren Vorsprung (4) und dem oberen Vorsprung (5) radial ab dem inneren Umfang des Aufnahmeabschnitts (2) erstreckt, wobei jeder eine geneigte Ebene bildet, die zu dem Hohlraum zeigt.

4. Flasche (100) nach einem der Ansprüche 1 bis 3, wobei der Aufnahmeabschnitt (2) einen ringförmigen Übergangsteil (8) umfasst, der sich zwischen dem unteren Vorsprung (4) und dem oberen Vorsprung (5) erstreckt, wobei der Übergangsteil (8) einen Innendurchmesser aufweist, der zirka 0,2 bis 0,6 Millimeter größer als der Durchmesser der Applikationskugel (3) ist.

5. Flasche (100) nach einem der Ansprüche 1 bis 4, wobei der Reservoirabschnitt (1) ein Halteorgan (15) der im Aufnahmeabschnitt (2) rotierend beweglichen Applikationskugel (3) umfasst.

6. Flasche (100) nach Anspruch 5, wobei das Halteorgan (15) eine Scheibenform aufweist, umfassend Öffnungen, die die Dicke der Scheibe derart durchqueren, dass die Zirkulation des Produkts zwischen dem Reservoirabschnitt (1) und dem Aufnahmeabschnitt (2) möglich ist.

7. Flasche (100) nach einem der Ansprüche 5 bis 6, wobei der Reservoirabschnitt (1) aufweist:
- mindestens ein Rückhaltelement (16), auf dem das Halteorgan (15) imstande ist, sich abzustützen, und
- ein Anschlagorgan (17), wogegen das Halteorgan (15) imstande ist, anzuschlagen, wobei das Halteorgan (15) zwischen dem mindestens einen Rückhalteelement (16) und dem Anschlagorgan (17) angeordnet ist.

8. Flasche (100) nach einem der Ansprüche 5 bis 7, wobei das mindestens eine Rückhalteelement (16) aus der inneren Fläche des Reservoirabschnitts (1) herausragt.

9. Flasche (100) nach einem der Ansprüche 5 bis 8, wobei das Anschlagorgan (17) eine Rippe umfasst, die aus der inneren Fläche des Reservoirabschnitts (1) herausragt.

10. Flasche (100) nach einem der Ansprüche 5 bis 9, wobei der Reservoirabschnitt (1), der Aufnahmeabschnitt (2), der untere Vorsprung (4), der obere Vorsprung (5), das Anschlagorgan (17), das mindestens eine Rückhalteelement (16) und die Kappe (6) einstückig ausgebildet sind.

11. Flasche (100) nach einem der Ansprüche 1 bis 10, wobei die Wand der Kappe (6) einen inneren Wandabschnitt (9) und einen äußeren Wandabschnitt (11) umfasst, wobei die durchtrennbare Zone (7) konfiguriert ist, um nur den äußeren Wandabschnitt (11) mit der Wand des Aufnahmeabschnitts (2) zu verbinden.

12. Flasche (100) nach Anspruch 11, wobei der Aufnahmeabschnitt (2), die Applikationskugel (3) und die durchtrennbare Zone (7) derart konfiguriert sind, dass der hervorstehende Abschnitt der Applikationskugel (3) vom inneren Wandabschnitt (9) der Kappe (6) beabstandet ist, wenn die Flasche (100) mit dem Kopf nach unten ist.

13. Flasche (100) nach einem der Ansprüche 1 bis 12, wobei der Reservoirabschnitt (1) eine Wand aufweist, die eine allmähliche Dicke zwischen einer ersten Endregion (12), die mit dem Aufnahmeabschnitt (2) verbunden ist, und einer zweiten Endregion (13) gegenüber der ersten Endregion (12) aufweist und insbesondere eine Dicke, die zwischen zirka 0,75 mm und 0,45 mm schwankt, wobei sich die dünnste Dicke der Wand in einer zentralen Region des Reservoirabschnitts (1) befindet, die sich zwischen der ersten Endregion (12) und der zweiten Endregion (13) erstreckt.

## Claims

1. A bottle (100) intended to the delivery of a liquid, pasty or solid product in which the bottle (100) comprises:
- a reservoir portion (1) intended to contain the product,
- a housing portion (2) communicating with the reservoir portion (1),
- an application roller (3) for applying the product, the application roller (3) being housed at least partly in the housing portion (2), by being movable in rotation, the housing portion (2) being configured to cooperate with the application roller (3) to regulate the delivery of the product,
- a cap (6) connected via a breakable area (7) to the housing portion (2), the cap (6) being configured to prohibit the delivery of the product before rupture of the breakable area (7),
the inner periphery of the housing portion (2) being provided with at least one lower protuberance (4) and one upper protuberance (5) shifted relative to the lower protuberance (4) along the longitudinal axis of the bottle (100) and in a direction towards the cap (6), the lower protuberance (4) and the upper protuberance (5) delimiting a cavity in which the application roller (3) is at least partially housed, **characterized in that** the lower protuberance (4) has an inner diameter greater than the inner diameter of the upper protuberance (5).

2. The bottle (100) according to claim 1, wherein at least one of the protuberances among the lower protuberance (4) and the upper protuberance (5) has generally an annular shape.

3. The bottle (100) according to any of claims 1 to 2, wherein at least one of the protuberances among the lower protuberance (4) and the upper protuberance (5) extends radially from the inner periphery of the housing portion (2) by forming each an inclined face oriented towards the cavity.

4. The bottle (100) according to any of claims 1 to 3, wherein the housing portion (2) comprises a ring-shaped intermediate part (8) extending between the lower protuberance (4) and the upper protuberance (5), the intermediate part (8) having an inner diameter greater of about 0.2 to 0.6 millimeter than the diameter of the application roller (3).

5. The bottle (100) according to any of claims 1 to 4, wherein the reservoir portion (1) comprises a holding member (15) of the application roller (3) movable in rotation in the housing portion (2).

6. The bottle (100) according to claim 5, wherein the holding member (15) has a disk shape comprising openings passing through the thickness of the disk so as to allow the circulation of the product between the reservoir portion (1) and the housing portion (2).

7. The bottle (100) according to any of claims 5 to 6 wherein the reservoir portion (1) includes:
- at least one retaining element (16) against which the holding member (15) is capable of bearing, and
- a stop member (17) against which the holding member (15) is capable of abutting, the holding member (15) being disposed between the at least one retaining element (16) and the stop member (17).

8. The bottle (100) according to any of claims 5 to 7, wherein the at least one retaining element (16) protrudes from the inner surface of the reservoir portion (1).

9. The bottle (100) according to any of claims 5 to 8, wherein the stop member (17) comprises a rib protruding from the inner surface of the reservoir portion (1).

10. The bottle (100) according to any of claims 5 to 9, wherein the reservoir portion (1), the housing portion (2), the lower protuberance (4), the upper protuberance (5), the stop member (17), the at least one retaining element (16) and the cap (6) are integral.

11. The bottle (100) according to any of claims 1 to 10, wherein the wall of the cap (6) comprises an inner wall portion (9) and an outer wall portion (11), the breakable area (7) being configured to connect only the outer wall portion (11) to the wall of the housing portion (2).

12. The bottle (100) according to claim 11, wherein the housing portion (2), the application roller (3) and the breakable area (7) are configured such that the protruding portion of the application roller (3) is spaced from the inner wall portion (9) of the cap (6) when the bottle (100) is pointing down.

13. The bottle (100) according to any of claims 1 to 12, wherein the reservoir portion (1) includes a wall having a gradual thickness between a first end region (12) connected to the housing portion (2) and a second end region (13) opposite to the first end region (12), and in particular a thickness ranging between about 0.75 mm and 0.45 mm, the thinnest thickness of the wall being located in a central region of the reservoir portion (1) extending between the first end region (12) and the second end region (13).
